## Europäisches Patentamt

## European Patent Office

## Office européen des brevets

(11) Veröffentlichungsnummer: **0 223 733**
**B1**

# EUROPÄISCHE PATENTSCHRIFT

(45) Veröffentlichungstag der Patentschrift:
**17.05.89**

(51) Int. Cl.⁴: **F16C 33/10, F16N 7/22**

(21) Anmeldenummer: **86730171.5**

(22) Anmeldetag: **23.10.86**

(54) Gleitlager für horizontale Wellen mit Ringschmierung.

(30) Priorität: **08.11.85 DE 3540111**

(43) Veröffentlichungstag der Anmeldung:
**27.05.87 Patentblatt 87/22**

(45) Bekanntmachung des Hinweises auf die Patenterteilung:
**17.05.89 Patentblatt 89/20**

(84) Benannte Vertragsstaaten:
**AT CH DE FR GB IT LI SE**

(56) Entgegenhaltungen:
**DE-C- 397 001**
**FR-A- 2 010 928**

(73) Patentinhaber: **Siemens Aktiengesellschaft Berlin und München, Wittelsbacherplatz 2, D-8000 München 2(DE)**

(72) Erfinder: **Pollok, Hans-Jürgen, Dipl.-Ing., Limastrasse 22, D-1000 Berlin 37(DE)**

**Beschreibung**

Die Erfindung bezieht sich auf ein Gleitlager für horizontale Wellen mit Ringschmierung, bei dem die Lagerschale mit der Bohrung zur Aufnahme der Welle im oberen Teil ein oder mehrere, von der Bohrung ausgehende, radial liegende Schlitze zur Aufnahme je eines Schmierringes enthalten, dessen Durchmesser größer als der Wellendurchmesser ist, wobei die Seitenwände des Schlitzes in einem teilweisen Bereich mit Lagermetall versehen sind, das in Nuten mit parallelen, radialen, seitlichen Nutwänden eingegossen ist, von denen jeweils eine seitliche Nutwand bei der Herstellung der Seitenwand des Schlitzes abgearbeitet ist, und die Seitenwände des Schlitzes außerdem einen zurückgesetzten Absatz aufweisen, der einen größeren Abstand zur Seitenwand des Schmierringes hat als der mit Lagermetall versehene Bereich.

Ein derartiges Gleitlager mit Ringschmierung ist aus der Literaturstelle Moeller-Werr, "Leitfaden der Elektrotechnik", Band 3, "Konstruktion und Festigkeitsberechnungen elektrischer Maschinen", 3. Auflage B.G.-Teubner Verlagsgesellschaft Stuttgart, insbesondere aus der Abbildung 142.4 auf Seite 142 bekannt. Bei dem bekannten Gleitlager ist das Lagermetall in einer konzentrischen, von der Bohrung ausgehenden Nut mit Schwalbenschwanzvertiefungen eingegossen, sowohl längs der Bohrung, als auch an den Seitenwänden der in Radialebenen liegenden Schlitze zur Aufnahme je eines Schmierringes. Der Durchmesser des Schmierringes ist größer als der Wellendurchmesser. Der Schmierring liegt oben auf der Welle auf und kann in einem gewissen Bereich Pendelungen ausführen. Die Seitenwände des radialen Schlitzes weisen jeweils neben dem mit Lagermetall versehenen Bereich einen zurückgesetzten Absatz auf, welcher der Form des Schmierringes in diesem Bereich unter Berücksichtigung der möglichen Pendelungen angepaßt ist und einen größeren Abstand zur Seitenwand des Schmierringes hat als der mit Lagermetall versehene Bereich. Auf diese Weise wird eine Berührung der Seitenwände des Schmierringes mit dem Grundmetall der Lagerschale, wie Stahl oder Grauguß, vermieden, was eine zu starke Abnutzung des Schmierringes zur Folge haben würde.

Die Herstellung dieses zurückgesetzten Absatzes in der Seitenwand des Schlitzes erfordert bei einem Ausdrehen ein mehrmaliges außermittiges Umspannen der Lagerschale oder das Einlegen eines besonderen Kernes beim Guß der Lagerschale. Beides ist verhältnismäßig kompliziert. Der Erfindung liegt daher die Aufgabe zugrunde, die Seitenwände des Schlitzes so zu gestalten, daß seine Herstellung einfach ist und eine Berührung der Seitenwand des Schmierringes mit der Seitenwand des Schlitzes nur im Bereich des Lagermetalls möglich ist.

Zur Lösung dieser Aufgabe ist ein Gleitlager für horizontale Wellen mit Ringschmierung der eingangs beschriebenen Art gemäß der Erfindung so ausgebildet, daß der zurückgesetzte Absatz sich parallel zur waagerechten Durchmesserebene der Welle erstreckt und daß die obere Begrenzungsfläche des Absatzes den Bereich des Lagermetalls in der Seitenwand des Schlitzes angenähert dort schneidet, wo der Schmierring unter Berücksichtigung seiner möglichen Pendelung diesen Bereich verläßt.

Eine parallel zur waagerechten Durchmesserebene der Welle verlaufende, von dieser ausgehende Nut in der Seitenwand des Schlitzes zur Bildung des zurückgesetzten Absatzes läßt sich in einfacher Weise durch Fräsen oder Hobeln herstellen. Durch die Bemessung der Höhe dieser Nut in Abhängigkeit von den Abmessungen des mit Lagermetall versehenen Bereiches der Seitenwand und von den Abmessungen des Schmierringes und seiner möglichen Pendelung ist sicher gestellt, daß eine seitliche Anlage des Schmierringes nur im Bereich des Lagermetalls möglich ist, da der größere Abstand des zurückgesetzten Absatzes von der Seitenwand zur Seitenfläche des Schmierringes dort eine Anlage verhindert.

Es ist zweckmäßig, bei einer geteilten Lagerschale den mit Lagermetall versehenen Bereich der Seitenwand des Schlitzes von einer konzentrischen, von der Bohrung ausgehenden Nut zu bilden, weil diese leicht an der Drehbank mit einer Einstellung herstellbar ist.

Handelt es sich dagegen um eine beim Eingießen des Lagermetalls ungeteilte Lagerschale, so kann mit Vorteil die den mit Lagermetall versehenen Bereich der Seitenwand des Schlitzes bildende Nut eine parallel zur waagerechten Durchmesserebene der Welle verlaufende obere Begrenzungsfläche aufweisen, die auf beiden Seiten in eine oberhalb der waagerechten Durchmesserebene zur Bohrung zurückführende Kreisbogenfläche ausläuft. Eine derartige Nut ist mit Hilfe eines Fräsers herstellbar, dessen Durchmesser die seitlichen Kreisbogenflächen bestimmt.

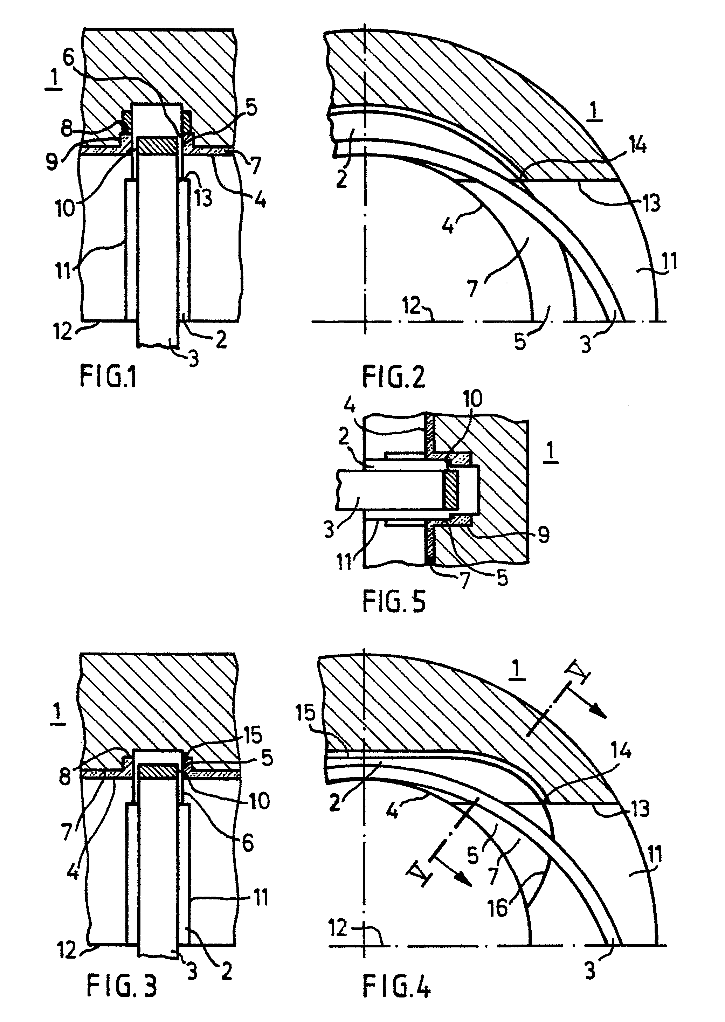

Im folgenden sei die Erfindung noch anhand der in den Figuren 1 bis 5 der Zeichnung dargestellten Ausführungsbeispiele erläutert. Von zwei verschieden ausgebildeten Ausführungsbeispielen der Erfindung zeigen die Figuren 1 und 3 jeweils einen Längsschnitt durch eine Lagerschale und den Schmierring bei weggelassener Welle, während in den Figuren 2 und 4 ein Teil des entsprechenden Radialschnittes dargestellt ist. Figur 5 zeigt einen Schnitt entlang der Linie V - V in Figur 4 ebenfalls durch die Lagerschale und dem Schmierring ohne Welle.

Das in den Figuren 1 und 2 dargestellte Ausführungsbeispiel zeigt den oberen Teil einer geteilten Lagerschale 1 eines Gleitlagers für horizontale Wellen mit Ringschmierung. Für diesen Zweck ist ein sich jeweils in einer Radialebene erstreckender Schlitz 2 zur Aufnahme des Schmierringes 3 vorgesehen. Der Schmierring 3 hat einen wesentlich größeren Durchmesser als die nicht dargestellte Welle, deren Durchmesser angenähert dem Durchmesser der Bohrung 4 der Lagerschale entspricht und liegt im oberen Bereich der Welle auf. Sowohl die Bohrung 4 der Lagerschale 1 als auch ein Bereich 5 der Seitenwand 6 des radialen Schlitzes 2 ist mit Lagermetall 7 versehen. Dieses Lagermetall 7 wird an jeder Seitenwand 6 in eine Nut 8 eingegossen, die zwei parallele seitliche Nutwände 9 aufweist, die in einer Radialebene liegen, und von denen jeweils ei-

ne seitliche Nutwand bei der Herstellung der Seitenwand 6 des Schlitzes 2 abgearbeitet ist. Dieser Bereich 5 der Seitenwand 6 des radialen Schlitzes 2 weist einen verhältnismäßig kleinen Abstand zur Seitenwand 10 des Schmierringes 3 auf.

Ferner ist in der Seitenwand 6 des radialen Schlitzes 2 noch ein zurückgesetzter Absatz 11 vorgesehen, der sich parallel zur waagerechten Durchmesserebene 12 der Welle erstreckt, so daß seine obere Begrenzungsfläche 13 ebenfalls parallel zur Durchmesserebene 12 liegt. Der Schnittpunkt 14 zwischen der oberen Begrenzungsfläche 13 des zurückgesetzten Absatzes 11 mit dem Bereich 5 des Lagermetalls 7 liegt angenähert dort, wo der Schmierring 3 unter Berücksichtigung seiner möglichen Pendelung diesen Bereich 5 verläßt. Der Schmierring 3 kann somit nur im oberen Teil des Bereiches 5 der Seitenwand 6 des radialen Schlitzes 2, der mit Lagermetall 7 versehen ist, zur Anlage gelangen, während er im Bereich des zurückgesetzten Absatzes 11 frei verläuft. Mithin tritt keine Berührung zwischen dem Werkstoff der Lagerschale 1, z. B. Stahl oder Grauguß, und dem Schmierring 3 auf. Die Herstellung des radialen Schlitzes 2 in der geteilten Lagerschale 1 ist einfach. Die Nut 8 zur Aufnahme des Lagermetalls 7 wird als konzentrische Nut zur Bohrung 4 der Lagerschale 1 ausgedreht. Der parallel zur waagerechten Durchmesserebene 12 der Welle verlaufende zurückgesetzte Absatz 11 läßt sich durch Fräsen herstellen.

Bei dem in den Figuren 3 bis 5 dargestellten etwas abgewandelten zweiten Ausführungsbeispiel der Erfindung sind für gleiche Teile die gleichen Bezugszeichen beibehalten worden. Bei diesen Ausführungsbeispiel kann die Lagerschale 1 zum Eingießen des Lagermetalls auch ungeteilt sein.

Auch hier liegt der Schmierring 3 in einem radialen Schlitz 2, der einen Bereich 5 der Seitenwand 6 enthält, der mit Lagermetall 7 versehen ist, sowie einen zurückgesetzten Absatz 11, der einen größeren Abstand zur Seitenwand 10 des Schmierringes 3 aufweist als der mit Lagermetall 7 versehene Bereich 5. Der zurückgesetzte Absatz 11 erstreckt sich parallel zur waagerechten Durchmesserebene 12 der Welle.

Bei diesem Ausführungsbeispiel hat die den mit Lagermetall 7 versehenen Bereich 5 der Seitenwand 6 des radialen Schlitzes 2 bildende Nut 8 eine andere Form als im ersten Ausführungsbeispiel. Sie weist im oberen Bereich der Lagerschale 1 eine parallel zur waagerechten Durchmesserebene 12 der Welle verlaufende obere Begrenzungsfläche 15 auf, die auf beiden Seiten in eine oberhalb der waagerechten Durchmesserebene 12 zur Bohrung 4 zurückführende Kreisbogenfläche 16 ausläuft. Die so geformte Nut 8 läßt sich mit Hilfe eines Fräsers einfach herstellen, dessen Durchmesser die Kreisbogenfläche 16 bestimmt. Auf diese Weise liegt der Schnittpunkt 14 zwischen der oberen Begrenzungsfläche 13 des zurückgesetzten Absatzes 11 und dem Bereich 5 mit Lagermetall 7 verhältnismäßig weit von der Bohrung 4 entfernt, obwohl insgesamt der mit Lagermetall 7 ausgefüllte Bereich 5 verkleinert worden ist.

## Patentansprüche

1. Gleitlager für horizontale Wellen mit Ringschmierung, bei dem die Lagerschale (1) mit der Bohrung (4) zur Aufnahme der Welle im oberen Teil ein oder mehrere, von der Bohrung (4) ausgehende, radial liegende Schlitze (2) zur Aufnahme je eines Schmierringes (3) enthalten, dessen Durchmesser größer als der Wellendurchmesser ist, wobei die Seitenwände (6) des Schlitzes (2) in einem teilweisen Bereich (5) mit Lagermetall (7) versehen sind, das in Nuten (8) mit parallelen, radialen, seitlichen Nutwänden (9) eingegossen ist, von denen jeweils eine seitliche Nutwand (9) bei Herstellung der Seitenwand (6) des Schlitzes (2) abgearbeitet ist, und die Seitenwände (6) des Schlitzes (2) außerdem einen zurückgesetzten Absatz (11) aufweisen, der einen größeren Abstand zur Seitenwand (10) des Schmierringes (3) hat, als der mit Lagermetall (7) versehene Bereich (5), **dadurch gekennzeichnet**, daß der zurückgesetzte Absatz (11) sich parallel zur waagerechten Durchmesserebene (12) der Welle erstreckt und daß die obere Begrenzungsfläche (13) des Absatzes (11) den Bereich (5) des Lagermetalls (7) in der Seitenwand (6) des Schlitzes (2) angenähert dort schneidet (14), wo der Schmierring (3) unter Berücksichtigung seiner möglichen Pendelung diesen Bereich (5) verläßt.

2. Gleitlager nach Anspruch 1, **dadurch gekennzeichnet**, daß bei einer geteilten Lagerschale (1) der mit Lagermetall (7) versehene Bereich (5) der Seitenwand (6) des Schlitzes (2) von einer konzentrischen, von der Bohrung (4) ausgehenden Nut (8) gebildet ist.

3. Gleitlager nach Anspruch 1, **dadurch gekennzeichnet**, daß die den mit Lagermetall (7) versehenen Bereich (5) der Seitenwand (6) des Schlitzes (2) bildende Nut (8) eine parallel zur waagerechten Durchmesserebene (12) der Welle verlaufende obere Begrenzungsfläche (15) aufweist, die auf beiden Seiten in eine oberhalb der waagerechten Durchmesserebene (12) zur Bohrung (4) zurückführende Kreisbogenfläche (16) ausläuft.

## Claims

1. Sliding bearing for horizontal shafts with annular lubrication, in which the bearing box (1) with the bore (4) for receiving the shaft in the upper part contains one or more radially lying slots (2) extending from the bore (4) for receiving in each case a lubricating ring (3), the diameter of which is greater than the shaft diameter, and the side walls (6) of the slot (2) are provided in a partial area (5) with bearing metal (7) which is cast in grooves (8) with parallel radial lateral groove walls (9), one lateral groove wall (9) of which is formed during production of the side wall (6) of the slot (2), and the side walls (6) of the slot (2) also have a recessed poriton (11) which has a greater distance from the side wall (10) of the lubricating ring (3) than the area (5) provided with bearing metal (7), characterised in that the recessed portion (11) extends parallel to the horizontal diametral plane (12) of the shaft and in that the upper limiting surface (13) of the portion (11) intersects the area (5) of the bearing metal (7) in the side wall (6) of the slot (2) approximately where the lubricating ring (3) leaves this area (5), taking into account its possible oscillation.

2. Sliding bearing according to claim 1, characterised in that when a bearing box (1) is divided the area (5), provided with bearing metal (7), of the side wall (6) of the slot (2) is formed by a concentric groove (8) proceeding from the bore (4).

3. Sliding bearing according to claim 1, characterised in that the groove (8) forming the area (5), provided with bearing metal (7), of the side wall (6) of the slot (2) has an upper limiting surface (15) which extends parallel to the horizontal diametral plane (12) of the shaft and continues on both sides into an arcuate surface (16) leading back to the bore (4) above the horizontal diametral plane (12).

**Revendications**

1. Palier lisse pour des arbres horizontaux à graissage par bague, dans lequel la coquille de coussinet (1) pourvue du perçage (4) pour recevoir l'arbre, comporte dans la partie supérieure une ou plusieurs fentes radiales (2) issues du perçage (4) et destinées à recevoir chacune une bague de graissage (3) dont le diamètre est supérieur au diamètre de l'arbre, du type dans lequel les parois latérales (6) de la fente (2) sont pourvues, dans une zone partielle (5), d'un métal antifriction (7) qui est coulé dans des gorges (8) à parois latérales radiales et parallèles (9) parmi lesquelles une paroi latérale (9) des gorges respectives et réalisée lors de l'aménagement de la paroi latérale (6) de la fente (2), alors que les parois latérales (6) de la fente (2) présentent, en outre, une partie détalonnée (11) possédant, par rapport à la paroi latérale (10) de la bague de graissage (3), une distance plus grande que celle de la zone (5) pourvue du métal antifriction (7), caractérisé par le fait que la partie détalonnée (11) s'étend parallèlement au plan diamétral horizontal (12) de l'arbre et que la surface limite supérieure (13) de la partie détalonnée (11) coupe la zone (5) du métal antifriction (7) dans la paroi latérale (6) de la fente (2), sensiblement à l'emplacement (14) où la bague de graissage (3) quitte cette zone (5), compte tenu de ses oscillations possibles.

2. Palier lisse selon la revendication 1, caractérisé par le fait que dans le cas d'une coquille de coussinet (1), la zone (5) de la paroi latérale (6) de la fente (2), qui est pourvue du métal antifriction (7), est formée par une gorge (8) concentrique et issue du perçage (4).

3. Palier lisse selon la revendication 1, caractérisé par le fait que la gorge (8) qui forme la zone (5) de la paroi latérale (6) de la fente (2), pourvue du métal antifriction (7), comporte une surface limite supérieure (15) qui s'étend parallèlement au plan diamétral horizontal (12) de l'arbre, ladite surface limite supérieure se terminant sur ses deux côtés par des surfaces en arc de cercle (16), situées au-dessus du plan diamétral horizontal (12), avec renvoi au perçage (4).

FIG.1

FIG.2

FIG.5

FIG.3

FIG.4